# EUROPÄISCHE PATENTSCHRIFT

(11) **EP 2 452 597 B1**
(45) Veröffentlichungstag und Bekanntmachung des Hinweises auf die Patenterteilung: **21.08.2013**
(21) Anmeldenummer: 11187270.1
(22) Anmeldetag: 31.10.2011
(51) Int. Cl.: A47J 31/52

(54) **Getränkezubereitungseinrichtung mit unterschiedlichen Klangbildern**
Drink preparation device with different acoustic patterns
Dispositif de préparation de boissons ayant des images sonores différentes

(30) Priorität: 12.11.2010 DE 102010043859
(43) Veröffentlichungstag der Anmeldung: 16.05.2012
(73) Patentinhaber: BSH Bosch und Siemens Hausgeräte GmbH, 81739 München (DE)
(72) Erfinder: Beck, Rudolf, 84518 Garching a. d. Alz (DE); Hoeck, Florian, 83334 Inzell (DE); Strobl, Robert, 83370 Seeon (DE)

(56) Entgegenhaltungen:
- EP-A1- 1 749 464
- DE-A1-102009 059 175
- DE-C- 619 410

## Beschreibung

Die Erfindung betrifft eine Getränkezubereitungseinrichtung mit mehreren auswählbaren Programmen, umfassend eine Pumpe zur Förderung von Flüssigkeiten für die Getränkezubereitung und eine Steuereinheit, die elektrisch mit der Pumpe und einer Energieversorgung verbunden ist, und die die Energievorsorgung der Pumpe steuert oder regelt. Getränkezubereitungseinrichtungen verfügen regelmäßig über verschiedene vom Nutzer wählbare Programme zur Erzeugung unterschiedlicher Getränke, zum Beispiel Filterkaffee und Espresso, sowie über diverse Dienstprogramme für ihre Pflege und Wartung wie beispielsweise ein Entkalkungsprogramm.

Die EP 0 387 477 A1 zeigt eine Ausschenkvorrichtung zur Abgabe eines Mischgetränkes mit einer Einspritzpumpe und einer Steuereinheit, die für die Pumpe für jede erfasste Teilmenge des durchströmenden Wassers einen Einspritztakt der Pumpe steuert. In einer bevorzugten Ausbildung ist die Einspritzpumpe als selbst ansaugende Kolbenpumpe ausgebildet, deren Kolben über eine von der Steuereinheit schaltbaren Magnetspule betätigbar ist. Zur Versorgung der Magnetspule kann das Wechselstromnetz dienen. Die Steuereinheit schaltet nach Einlangen eines Messimpulses eine am Wechselstromnetz liegende Einweg-Gleichrichterschaltung bei der nächsten Halbwelle des Wechselstromes an den Betätigungsmagneten der Pumpe, wobei die effektive Einschaltdauer der Magnetspule auf einen unter der Halbwellenzeit liegenden Wert einstellbar ist. Beim Einsatz der Kolbenpumpe kommt es - so wie bei Schwingkolbenpumpen generell - durch das mit der Frequenz der Netzhalbwellen getaktete Hin- und Herschlagen des Kolbens zu charakteristischen Klangbildern, die oft als störend empfunden werden.

Die DE 10 2009 059 174 A1 offenbart ein elektrisches Haushaltgerät mit einer elektronischen Steuerungsvorrichtung für unterschiedliche Bedientunktionen durch Auslösung von entsprechenden Schaltelementen, sowie mit einem akustischen Signalgeber, das dadurch gekennzeichnet ist, dass der Signalgeber ein elektronischer Klangerzeuger ist, mittels dessen Töne unterschiedlicher Schall-Frequenzen und/oder - amplituden erzeugbar sind.

Aufgabe der vorliegenden Erfindung ist es, die Bedienung einer Getränkezubereitungseinrichtung zu verbessern.

Diese Aufgabe wird bei einer Getränkezubereitungseinrichtung der eingangs genannten Art erfindungsgemäß dadurch gelöst, dass mittels Steuerung oder Regelung der Energieversorung durch die Steuereinheit während wenigstens eines Programms ein dem ausgewählten Programm zugeordnetes wiederholbares Klangbild beim Betrieb der Pumpe erzeugbar ist.

Unter einem Klangbild wird der akustische Gesamteindruck verstanden, der durch Schallsignale vermittelt wird, die im Wesentlichen durch Tonhöhe und Rhythmus charakterisiert sind. Die Steuereinheit steuert oder regelt auf später genauer beschriebene Weise die Versorgungsspannung oder den zeitlichen Stromverlauf der Pumpe, vorzugsweise einer Schwingkolbenpumpe. Auch wenn im Folgenden von Schwingkolbenpumpen die Rede ist, lässt sich das erfinderische Prinzip auch auf andere Pumpen übertragen. Die Klangbilder entstehen durch das spannungs- und/oder stromabhängig sich verändernde Betriebsgeräusch der Schwingkolbenpumpe im Zusammenwirken mit den übrigen Komponenten der Getränkezubereitungseinrichtung, zum Beispiel den schwingenden Teilen, möglichen Isolationsvorrichtungen und dem Gehäuse als Klangkörper. Das Betriebsgeräusch der Schwingkolbenpumpe selbst ähnelt einem mechanischen Summen oder Rattern und wird im Wesentlichen durch das rhythmische Hin- und Herschlagen des Schwingkolbens verursacht, insbesondere beim Anschlagen des Schwingkolbens in seinen beiden Endpositionen bzw. an seinen beiden Umkehrpunkten.

Der erfinderische Gedanke liegt also in der Steuerung oder Regelung der Energieversorgung nicht nur zur Regulierung des Förderflusses der Schwingkolbenpumpe, sondern zusätzlich zur Erzeugung bestimmter unterschiedlicher und identifizierbarer Klangbilder während der unterschiedlichen Brüh- und Dienstprogramme der Getränkezubereitungseinrichtung. Die Steuereinheit ermöglicht also mit dem Erzeugen unterschiedlicher akustischer Muster eine für einen Nutzer auch akustisch wahrnehmbare Unterscheidung unterschiedlicher Funktionen der Getränkezubereitungseinrichtung. Dazu werden keine zusätzlichen Klangerzeuger oder schalldämmende bzw. schallverändernde Maßnahmen benötigt. Die Erzeugung der Klangbilder wird vielmehr mit bereits vorhandenen Komponenten der Getränkezubereitungseinrichtung bewerkstelligt, namentlich der Steuereinheit und der Pumpe.

So kann die Steuereinheit Klangbilder erzeugen, die sich für jedes Getränkeprogramm deutlich unterscheiden und sich darüber hinaus mit dem hergestellten Getränk bzw. dem ausgeführten Dienstprogramm assoziieren lassen. Dadurch kann ein Nutzer auch ohne Sichtkontakt mit dem Gerät allein durch akustische Wahrnehmung identifizieren, welches Getränk die Getränkeeinrichtung aktuell zubereitet. Eine Fehlbedienung kann daher schon im laufenden Betrieb festgestellt werden und nicht erst durch ein unerwünschtes Ergebnis überraschen. Insbesondere eine klare akustische Differenzierung zwischen Getränke- und Dienstprogrammen kann dabei nützlich sein. In einem Extrembeispiel kann ein spezifisches unangenehmes Klangbild während des Entkalkungsprogramms als akustische Warnung dienen und somit helfen zu vermeiden, dass versehentlich ungenießbare Entkalkungsflüssigkeit konsumiert wird. Die Abstimmung der bei der Verwendung der Steuereinheit erzeugten Klangbilder kann beim Design der Steuereinheit mit Probanden in diversen Versuchsreihen erprobt und optimiert werden.

Nach einer vorteilhaften Ausgestaltung der Erfindung wird die Steuereinheit genutzt, um insbesondere verschiedene Taktmuster beim Betrieb der Schwingkolbenpumpe zu erzeugen. Das Taktmuster ergibt sich aus der zeitlichen Anordnung der akustischen Schläge im Klangbild der Schwingkolbenpumpe. Es sorgt für den Rhythmus im Klangbild der Schwingkolbenpumpe. Dazu steuert die Steuereinheit Zeitpunkt und Dauer der einzelnen Hin- und Herbewegungen des Schwingkolbens. Das kann in vorteilhafter Weise genutzt werden, um charakteristischere und deshalb besser wiedererkennbare Klangbilder zu generieren.

Nach einer weiteren vorteilhaften Ausgestaltung der Erfindung wird die Steuereinheit genutzt, um eine Versorgungsspannung oder den elektrische Strom im Hinblick auf Form und/oder Anzahl der zum Betreiben der Pumpe notwendigen nutzbaren Spannungs- und/oder Stromanteile zu modifizieren. Die Steuereinheit kann grundsätzlich sowohl mit Gleich- als auch mit Wechselspannung betrieben werden. Falls die Steuereinheit mit Gleichspannung betrieben wird, benötigt sie zusätzlich einen Impulsgenerator, der die für den Betrieb benötigte pulsierende Bestromung des Elektromagnets erzeugt. Auf den Impulsgenerator kann verzichtet werden, falls die Steuereinheit mit Wechselstrom betrieben wird. Auch wenn im Folgenden von Wechselstrom die Rede ist, lässt sich das erfinderische Prinzip auch auf eine pulsierende Bestromung übertragen. Wesentlich ist, dass die Steuereinrichtung zum Beispiel mit Hilfe einer angepassten Phasenan- und/oder Abschnittsteuerung die Auslenkung und die Arbeitsfrequenz des Schwingkolbens steuert. Die Arbeitsfrequenz des Schwingkolbens ergibt sich aus der Anzahl vollständiger Bewegungszyklen des Schwingkolbens pro Zeiteinheit. Ein Bewegungszyklus umfasst dabei das Ansaugen und das anschließende Herausdrücken der Flüssigkeit, dass heißt, die Bewegung des Schwingkolbens von seiner ersten Endposition hin zu seiner zweiten Endposition und wieder zurück zur ersten Endposition. Durch Regulieren der Arbeitsfrequenz des Schwingkolbens bestimmt die Steuereinheit das Frequenzmuster der Schwingkolbenpumpe und damit den Rhythmus und die Tonhöhe des Klangbilds. Das geschieht durch entsprechendes Sperren oder Durchlassen der Netzhalbwellen der Versorgungsspannung. Durch Modifizieren der Form, das heißt der Länge und Amplitude der durchgelassenen Netzhalbwellen, definiert die Steuereinheit die Intensität, das heißt die Geschwindigkeit und den Betrag der Auslenkung des Schwingkolbens und damit insbesondere die Lautstärke des Klangbilds. Damit kann die Steuereinheit unterschiedliche und deutlich voneinander abgrenzbare Klangbilder erzeugen. Die Steuereinheit kann mit der in Deutschland üblichen Netzspannung von 230 V und einer Netzfrequenz von 50 Hz, aber auch mit anderen Netzspannungen und anderen Netzfrequenzen versorgt werden. Auch kann in einer weiteren Ausgestaltung anstelle des von den Energieversorgern bereitgestellten Stromnetzes eine von Transformatoren gewandelte Betriebsspannung an die Steuereinheit angelegt werden.

Nach einer weiteren vorteilhaften Ausgestaltung der Erfindung wird die Steuereinheit genutzt, um durch Aktiv-Schalten von Netzhalbwellen einer Wechselspannung als Versorgungsspannung Frequenzmuster zu erzeugen, die sich aus ganzzahligen Teilern der doppelten Netzfrequenz ergeben. Bei der in Europa üblichen Netzspannung von 230 Volt und 50 Hz sind das zum Beispiel 100 Hz, 50 Hz, 33,3 Hz, 25 Hz und so weiter. "Aktiv-Schaiten" von Netzhalbwellen bedeutet in diesem Zusammenhang, sie für den Betrieb der Schwingkolbenpumpe zu nutzen, dass heißt zur Bestromung der Magnetspule durchzulassen. Insbesondere bei einer sogenannten Vollwellensteuerung kann die Steuereinheit mehrere Netzhalbwellen unmittelbar hintereinander sperren oder durchlassen, dass heißt aktiv schalten. Dabei kann die Anzahl der gesperrten oder der durchgelassenen Netzhalbwellen gleich oder auch unterschiedlich sein. Sowohl die Anzahl als auch die zeitliche Anordnung von aktiv geschalteten Netzhalbwellen bilden das Frequenzmuster. Werden zum Beispiel alle Netzhalbwellen der Versorgungsspannung durchgelassen, so ergibt sich als Frequenzmuster die doppelte Netzfrequenz der Versorgungsspannung.

Generell entstehen bei der Erzeugung von Frequenzmustern aus ganzzahligen Teilern einer Basisfrequenz, zum Beispiel der doppelten Netzfrequenz, in vorteilhafter Weise Klänge, die von Menschen gut unterschieden werden können und die aufgrund ihres eng umgrenzten Frequenzbereichs sowie ihrer periodischen Wiederholung einen beinahe tonalen Charakter haben. So erhöht sich die wahrgenommene Grundtonhöhe des Klangbilds bei Verdoppelung der Frequenz um eine Oktave. Ein weiterer Vorteil besteht darin, dass für das Aktiv-Schalten sowie das Sperren von Netzhalbwellen für die Steuerungseinheit nur einfache elektronisch schaltende Elemente, z.B. Tyhristoren, Triacs, MOSFETs oder IGBTs benötigt werden. Nach einer weiteren vorteilhaften Ausgestaltung der Erfindung wird die Steuereinheit genutzt, um durch Modifizieren des Ein- und/oder Ausschaltphasenwinkels von Netzhalbwellen der Versorgungsspannung die Lautstärke und Feincharakteristik des Klangbilds zu definieren. Hierbei modifiziert die Steuereinheit zusätzlich die Form der aktiv geschalteten Netzhalbwellen. Dazu verfügt die Steuereinheit über eine Phasenanschnittsteuerung und/oder eine Phasenabschnittsteuerung. Bei einer Phasenanschnittsteuerung oder einer Phasenabschnittsteuerung wird die Zeitdauer einer Netzhalbwelle im gewünschten Maße verkürzt, dass heißt die Strom- bzw. Spannungszeitfläche verkleinert und somit die elektrische Leistung reduziert. Es wird eine Netzhalbwelle in einen stromführenden und einen nichtstromführenden Abschnitt unterteilt. Wird jeder Netzhalbwelle ein Winkel von 180° (entsprechend einer halben Generatordrehung) zugeordnet, gibt der Einschaltwinkel den Zeitpunkt an, ab dem der stromführende Abschnitt beginnt. Entsprechend gibt der Ausschaltwinkel an, wann ein nicht-stromführender Abschnitt beginnt. Mit einer Phasenanschnittsteuerung wird der Einschaltwinkel festgelegt, mit einer Phasenabschnittsteuerung der Ausschaltwinkel. Durch die verschiedenen Ein- und Ausschaltwinkel wird das Frequenzmuster nicht verändert, jedoch wird die Lautstärke und Charakteristik des Klangbilds beeinflusst. Je kleiner der Teil der Netzhalbwelle ist, der aktiv geschaltet wird, desto leiser ist das resultierende Klangbild, da der Pumpkolben mit weniger Energie ausgelenkt wird.

Mit einer Kombination aus Phasenanschnitt- und/oder Phasenabschnittsteuerung und Aktiv-Schalten oder Sperren der Netzhalbwellen kann der Spannungs- bzw. Stromverlauf in weitem Umfang abgeändert werden und damit auch das Klangbild.

Durch praktische Versuche hat sich herausgestellt, dass für die maximale Auslenkung des Schwingkolbens nicht eine komplette Netzhalbwelle aktiv geschaltet werden muss. Es reicht vielmehr aus, z. B. bei einer Netzspannung von 230 Volt, die Schwingkolbenpumpe nur mit 2/3 der Energie einer Netzhalbwelle zu versorgen. Damit wird zwar der Schwingkolben maximal ausgelenkt, er schlägt jedoch nicht mehr mit der vollen Wucht in seine hintere Endlage. Das reduziert die Geräuschemission der Getränkezubereitungseinrichtung um ein Vielfaches. Die Förderleistung der Schwingkolbenpumpe bleibt davon jedoch unberührt. Bei geschickter Ansteuerung kann das Anschlagen sogar ganz vermieden werden.

Für die Implementierung der Phasenanschnittsteuerung und/oder der Phasenabschnittsteuerung verfügt die Steuerungseinheit über elektronisch schaltende Elemente, z.B. Tyhristoren, Triacs, MOSFETs oder IGBTs. Alternativ können auch aufwendigere regelbare Schaltnetzteile zum Einsatz kommen.

Nach einer weiteren vorteilhaften Ausgestaltung der Erfindung wird die Steuereinheit genutzt, um den bei einem Klangbild auftretenden Förderfluss der Schwingkolbenpumpe auf die jeweilige Getränkezubereitung abzustimmen. Dabei wird der Förderfluss der Schwingkolbenpumpe so bemessen, dass er für die Zubereitung der einzelnen Getränkearten bzw. die Ausführung der Dienstprogramme von Vorteil ist. Die Variationen der Förderflussmenge für das jeweilige Klangbild sind dabei durch die physikalischen Gegebenheiten begrenzt.

Das Prinzip der Erfindung wird im Folgenden anhand einer Zeichnung beispielshalber noch näher erläutert. In der Zeichnung zeigen:
- Figur 1: einen Kaffeevollautomaten mit Schwingkolbenpumpe und Steuereinheit,
- Figur 2: einen Grafen der Netzspannung, mit der die Steuereinheit aus Figur 1 versorgt wird,
- Figur 3: eine Tabelle mit Parametereinstellungen für die Steuereinheit aus Figur 1.

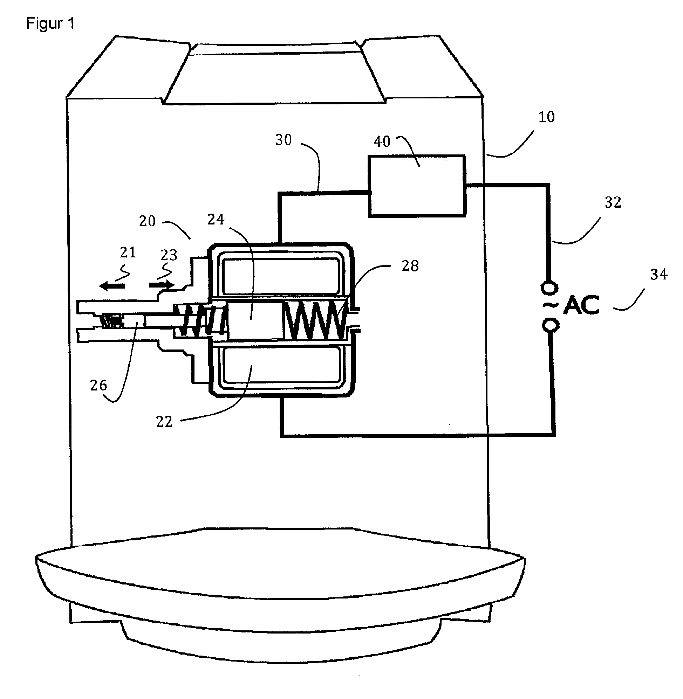

Figur 1 zeigt einen Querschnitt durch eine Schwingkolbenpumpe 20 eines Kaffeevollautomaten 10 mit einer Magnetspule 22, einem Schwingkolben 24, einer Pumpkammer 26 und einer Feder 28. Die Schwingkolbenpumpe 20 ist über eine elektrische Leitung 30 mit einer Steuereinheit 40 verbunden. Die Steuereinheit 40 bezieht elektrischen Strom mit einer Spannung von 230 Volt und einer Netzfrequenz von 50 Hz über einen Netzanschluss 32 aus dem Stromnetz 34.

Beim Betrieb der Schwingkolbenpumpe 20 bewirkt ein magnetisches Feld der bestromten Magnetspule 22, das der ferromagnetische Schwingkolben 24 zunächst gegen die Feder 28 gespannt und dann bei nicht-bestromter Magnetspule 22 wieder entlassen wird. Die Steuereinheit 40 versorgt in einem ersten Pumpzyklus die Magnetspule 22 mit elektrischer Energie, so dass ein magnetisches Feld aufgebaut wird, infolgedessen der Schwingkolben 24 in Spannrichtung 23 aus der Pumpkammer 26 ausgelenkt wird. Es entsteht ein Unterdruck in der Pumpkammer 26, die sich dadurch mit Flüssigkeit füllen kann. In einem zweiten Pumpzyklus unterbricht die Steuereinheit 40 die Spannungsversorgung der Magnetspule 22 und das magnetische Feld bricht zusammen. Mangels Gegenkraft drückt die durch den ersten Pumpzyklus gespannte Feder 28 den Schwingkolben 24 in die Pumpkammer 26 zurück. Die Flüssigkeit in der Pumpkammer 26 wird verdrängt und in Pumprichtung 21 aus der Schwingkolbenpumpe 20 gefördert. Während des Pumpvorgangs wiederholen sich die Vorgänge der beiden Pumpzyklen. Dabei entsteht durch das Betriebsgeräusch der Schwingkolbenpumpe 20, insbesondere durch das Anschlagen des Pumpkolbens 24 in seiner jeweiligen Endlage, ein rhythmisches Klangbild beim Betrieb des Kaffeevollautomaten 10.

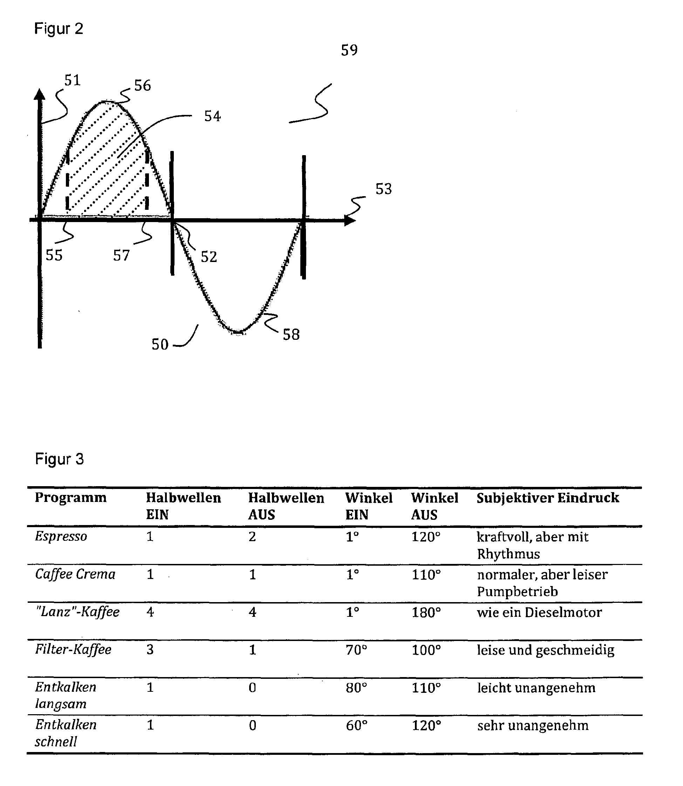

Figur 2 zeigt in einem kartesischen Koordinatensystem 59 den Grafen einer Periode der sinusförmigen Netzspannung 50, mit der die Steuereinheit 40 des Kaffeevollautomaten 10 aus Figur 1 während des Betriebs versorgt wird. Auf der Ordinate 53 ist die Zeit aufgetragen, die Abszisse 51 zeigt die zeitlich veränderliche Spannung. Die Kurve der Netzspannung 50 verläuft punktsymmetrisch um einen Nullpunkt 52. Die Netzspannung 50 setzt sich, bezogen auf den Spannungswert, aus positiven Netzhalbwellen 56 und negativen Netzhalbwellen 58 zusammen. Die positiven Netzhalbwellen 56 verlaufen jeweils im positiven Spannungsbereich oberhalb der Ordinate 53, die negativen Netzhalbwellen 58 jeweils im negativen Spannungsbereich unterhalb der Ordinate 53.

Für den Betrieb der Schwingkolbenpumpe 20 aus Figur 1 schaltet die Steuereinheit 40 nur positive Netzhalbwellen 56 aktiv, dass heißt sie lässt ausschließlich positive Netzhalbwellen 56 zur Schwingkolbenpumpe 20 durch. Die Steuereinheit 40 bestimmt durch Anzahl und Abfolge der aktiv geschalteten Netzhalbwellen den Förderfluss und zugleich das Klangbild der Schwingkolbenpumpe 20 derart, dass das Klangbild und das erzeugte Getränk bzw. Dienstprogramm des Kaffeevollautomaten 10 nach subjektiven Empfinden von Testpersonen gut zusammen passen.

Zur Feinregulierung der Schwingkolbenpumpe 20 modifiziert die Steuereinheit 40 zusätzlich die Form der aktiv geschalteten Netzhalbwellen. Anstelle der kompletten Netzhalbwelle lässt sie nur Ausschnitte, so genannte Teilhalbwellen 54, und damit nur einen Teil der Energie der Netzhalbwelle zur Magnetspule 24 durch. Dazu verfügt die Steuereinheit 40 sowohl über eine Phasenanschnittsteuerung als auch eine Phasenabschnittsteuerung. Die Phasenanschnittsteuerung bewirkt, dass erst ab einem definierten Zeitpunkt, dem Einschaltwinkel 55, der Strom der aktiven Netzhalbwelle zur Schwingkolbenpumpe 20 durchgelassen wird. Die Phasenabschnittsteuerung bewirkt, dass bis zu einem definierten Zeitpunkt, dem Ausschaltwinkel 57, der Strom der aktiven Netzhalbwelle zur Schwingkolbenpumpe 20 durchgelassen wird. Durch die verschiedenen Ein- und Ausschaltwinkel 55, 57 sind der Förderfluss der Schwingkolbenpumpe 20 und die Lautstärke des Klangbilds des Kaffeevollautomaten so aufeinander abgestimmt, dass das hergestellte Getränk bzw. das aktive Dienstprogramm und die Lautstärke des Klangbilds gemäß dem subjektiven Empfinden von Testpersonen gut harmonieren. Eine detaillierte Beschreibung hierzu findet sich in Figur 3.

Dabei gilt, je kleiner die Teilhalbwelle 54 ist, desto geringer ist die Lautstärke, da der Pumpkolben 20 dann mit weniger Energie ausgelenkt wird. Insbesondere schlägt der Pumpkolben 20 bei geeigneter Einstellung der Teilhalbwelle 54 nicht mehr mit der vollen Wucht in seine hintere Endlage.

Figur 3 zeigt eine Tabelle mit Parametereinstellungen der Steuereinheit 40 und einer Klangbewertung des Kaffeevollautomaten 10 aus Figur 1 für unterschiedliche Getränke- und Dienstprogramme. In der ersten Spalte wird das jeweilige Getränke- bzw. Dienstprogramm genannt. In der zweiten und dritten Spalte ist das von der Steuereinheit 40 für die Erstellung des Getränks bzw. für das Dienstprogramm generierte Frequenzmuster beschrieben. Dazu enthält die zweite Spalte die Anzahl der im ersten Pumpzyklus aktiv geschalteten Netzhalbwellen und die dritten Spalte die Anzahl der im zweiten Pumpzyklus gesperrten Netzhalbwellen. In der vierten und fünften Spalte ist die Feinregulierung der Schwingkolbenpumpe 20 beschrieben. Dazu enthalten die vierte Spalte den Einschalfiivinkel für die Phasenanschnittsteuerung und die fünfte Spalte den Ausschaltwinkel für die Phasenabschnittsteuerung. Die sechste und letzte Spalte enthält eine Kurzbeschreibung des subjektiven Klangeindrucks von Testpersonen.

Wie bereits oben beschrieben, erzeugt die Steuereinheit 40 durch Anzahl und Abfolge aktiv geschalteter Netzhalbwellen verschiedene Frequenzmuster beim Betrieb der Schwingkolbenpumpe 20. Die Frequenzmuster stehen dabei immer in Zusammenhang mit der Netzfrequenz von 50 Hz. Beispielsweise schaltet die Steuereinheit 40 für die Zubereitung von Espresso im ersten Pumpzyklus eine Netzhalbwelle aktiv und sperrt im zweiten Pumpzyklus zwei Netzhalbwellen. Zusätzlich erzeugt sie aus den aktiv geschalteten Netzhalbwellen Teilhalbwellen 54 - wie in Figur 2 dargestellt - mit einem Einschaltwinkel 55 von 1° ° und einem Ausschalfiivinkel 57 von 120°. Daraus ergibt sich ein Grundton von etwa 33,3 Hz, der von Testpersonen als "kraftvoll, aber mit Rhythmus" empfunden wird. Filterkaffee wird dagegen mit drei aktiv geschalteten Netzhalbwellen im ersten Pumpzyklus und einer gesperrten Netzhalbwelle im zweiten Pumpzyklus erzeugt. Die aktiv geschalteten Netzhalbwellen werden auf Teilhalbwellen 54 im Phasenwinkelbereich von 70° bis 100° reduziert. Das ergibt einen Grundton von 25 Hz, der von Testpersonen als "leise und geschmeidig" empfunden wird, da eine vergleichsweise kleine, energieärmere Teilhalbwelle 54 erzeugt wird.

Die Parameter der Steuereinheit 40 sind zum einen so eingestellt, dass Rhythmus und Klangbild sich für jedes Getränkeprogramm signifikant unterscheiden und sich außerdem mit dem hergestellten Getränk bzw. mit dem ausgeführten Dienstprogramm gemäß dem subjektiven Eindruck von Testpersonen gut assoziieren lassen. Zum anderen sind die Parameter so eingestellt, dass der daraus resultierende Förderfluss der Schwingkolbenpumpe 20 für die Zubereitung der einzelnen Getränkearten bzw. die Ausführung der Dienstprogramme geeignet ist. Beim Dienstprogramm "Entkalken langsam" z. B. schaltet die Steuereinheit 40 alle Netzhalbwellen aktiv und reduziert sie außerdem auf eine Teilhalbwelle 54 im Phasenwinkelbereich zwischen 80° und 110°. Das ergibt einen Grundton von 100 Hz. Die Netzfrequenz von 100 Hz wird von Testpersonen als "leicht unangenehm" empfunden und somit intuitiv nicht mit einem üblicherweise als angenehm empfundenen Getränk assoziiert und eventuell verwechselt. Das hilft zu vermeiden, dass versehentlich ungenießbare Entkalkungsflüssigkeit konsumiert wird.

Grundsätzlich lassen sich mit der Steuereinheit 40 zum Betrieb der Schwingkolbenpumpe 20 alle Grundfrequenzen generieren, die sich aus der doppelten Netzfrequenz der Versorgungsspannung von 100 Hz und deren ganzzahligen Teilern ergeben, z. B. 100 Hz, 50 Hz, 33,3 Hz, 25 Hz.

Da es sich bei der vorhergehenden, detailliert beschriebenen Schwingkolbenpumpe um ein Ausführungsbeispiel handelt, kann sie in üblicher Weise vom Fachmann in einem weiten Umfang modifiziert werden, ohne den Bereich der Erfindung zu verlassen. Insbesondere können auch die konkreten Ausgestaltungen der Klangbilder in anderer Form als in der hier beschriebenen erfolgen. Weiterhin schließt die Verwendung der unbestimmten Artikel "ein" bzw. "eine" nicht aus, dass die betreffenden Merkmale auch mehrfach vorhanden sein können.

### Bezugszeichenliste

- 10: Getränkezubereitungseinrichtung
- 20: Schwingkolbenpumpe
- 21: Pumprichtung
- 22: Magnetspule
- 23: Spannrichtung
- 24: Schwingkolben
- 26: Pumpkammer
- 28: Feder
- 30: Elektrische Leitung
- 32: Netzanschluss
- 34: Stromnetz
- 40: Steuereinheit
- 50: Sinusförmige Netzspannung
- 51: Abszisse
- 52: Nullpunkt
- 53: Ordinate
- 54: Teilhalbwelle
- 55: Einschaltwinkel
- 56: Positive Netzhalbwelle
- 57: Ausschaltwinkel
- 58: Negative Netzhalbwelle
- 59: Kartesisches Koordinatensystem

## Patentansprüche

1. Getränkezubereitungseinrichtung (10) mit mehreren auswählbaren Programmen, umfassend eine Pumpe (20) zur Förderung von Flüssigkeiten für die Getränkezubereitung und eine Steuereinheit (40), die elektrisch mit der Pumpe (20) und einer Energieversorgung verbunden ist, und die die Energievorsorgung der Pumpe (20) steuert oder regelt, **dadurch gekennzeichnet, dass** mittels Regelung oder Steuerung der Versorgungsspannung durch die Steuereinheit (40) während wenigstens eines Programms ein dem ausgewählten Programm zugeordnetes Klangbild beim Betrieb der Pumpe (20) erzeugbar ist.

2. Getränkezubereitungseinrichtung nach Anspruch 1, **dadurch gekennzeichnet, dass** die Steuereinheit (40) verschiedene Taktmuster beim Betrieb der Pumpe (20) erzeugt.

3. Getränkezubereitungseinrichtung nach Anspruch 2, **gekennzeichnet durch** eine Modifikation der Versorgungsspannung im Hinblick auf Form und/oder Anzahl der zum Betreiben der Pumpe (20) notwendigen nutzbaren Spannungs- und/oder Stromanteile.

4. Getränkezubereitungseinrichtung nach Anspruch 3, **dadurch gekennzeichnet, dass** die Steuereinheit (40) durch Aktiv-Schalten von Netzhalbwellen (56, 58) einer Wechselspannung (50) als Versorgungsspannung Frequenzmuster erzeugt, die sich aus ganzzahligen Teilern der doppelten Netzfrequenz ergeben.

5. Getränkezubereitungseinrichtung nach Anspruch 3 und 4, **dadurch gekennzeichnet, dass** die Steuereinheit (40) durch Modifizieren des Ein- und/oder Ausschaltphasenwinkels von Netzhalbwellen (56, 58) der Versorgungsspannung die Lautstärke und Feincharakteristik des Klangbilds definiert.

6. Getränkezubereitungseinrichtung nach Anspruch 4 bis 6, **dadurch gekennzeichnet, dass** der bei einem Klangbild auftretende Förderfluss der Pumpe (20) auf die jeweilige Getränkezubereitung abgestimmt ist.

## Claims

1. Beverage preparation device (10) having a plurality of selectable programs, comprising a pump (20) for conveying liquids for beverage preparation and a control unit (40), which is connected electrically to the pump (20) and an energy supply and which controls or regulates the energy supply to the pump (20), **characterised in that** an acoustic pattern assigned to the selected program can be generated during operation of the pump (20) by means of regulation or control of the supply voltage by the control unit (40) during at least one program..

2. Beverage preparation device according to claim 1, **characterised in that** the control unit (40) generates different clock patterns during operation of the pump (20).

3. Beverage preparation device according to claim 2, **characterised by** a modification of the supply voltage in terms of form and/or number of useable voltage and/or current components required to operate the pump (20).

4. Beverage preparation device according to claim 3, **characterised in that** the control unit (40) generates frequency patterns resulting from integer factors of double the mains frequency by actively switching mains half-waves (56, 58) of an alternating voltage (50) as the supply voltage.

5. Beverage preparation device according to claim 3 and 4, **characterised in that** the control unit (40) defines the volume and fineness of the acoustic pattern by modifying the switch-on phase angle and/or switch-off phase angle of mains half-waves (56, 58) of the supply voltage.

6. Beverage preparation device according to claim 4 to 6, **characterised in that** the flow conveyed by the pump (20) for an acoustic pattern is matched to the respective beverage preparation.

## Revendications

1. Dispositif de préparation de boissons (10) doté de plusieurs programmes sélectionnables, comprenant une pompe (20) pour le transport des liquides pour la préparation de boissons et une unité de commande (40) qui est raccordée électriquement à la pompe (20) et à un dispositif d'alimentation en énergie, et qui commande ou règle le dispositif d'alimentation en énergie de la pompe (20), **caractérisé en ce qu'**une image sonore attribuée au programme sélectionné peut être générée lors du fonctionnement de la pompe (20) au moyen du réglage ou de la commande de la tension d'alimentation par l'unité de commande (40) pendant au moins un programme.

2. Dispositif de préparation de boissons selon la revendication 1, **caractérisé en ce que** l'unité de commande (40) génère différents modèles de rythme lors du fonctionnement de la pompe (20).

3. Dispositif de préparation de boissons selon la revendication 2, **caractérisé par** une modification de la tension d'alimentation en ce qui concerne la forme et/ou le nombre de fractions de tension et/ou de courant utilisables nécessaires pour le fonctionnement de la pompe (20).

4. Dispositif de préparation de boissons selon la revendication 3, **caractérisé en ce que** l'unité de commande (40) génère des modèles de rythme par la connexion active de demi-ondes de réseau (56, 58) d'une tension alternative (50) en tant que tension d'alimentation, lesquels modèles de fréquence résultent de diviseurs à nombre entier de la fréquence de réseau double.

5. Dispositif de préparation de boissons selon les revendications 3 et 4, **caractérisé en ce que** l'unité de commande (40) définit l'intensité sonore et les caractéristiques fines de l'image sonore par modification de l'angle de phase de connexion et/ou de déconnexion des demi-ondes de réseau (56, 58).

6. Dispositif de préparation de boissons selon les revendications 4 à 6, **caractérisé en ce que** le débit de la pompe (20) se produisant lors d'une image sonore est harmonisé avec la préparation de la boisson respective.
